# EUROPÄISCHE PATENTSCHRIFT

(11) **EP 2 185 794 B1**
(45) Veröffentlichungstag und Bekanntmachung des Hinweises auf die Patenterteilung: **18.06.2014**
(21) Anmeldenummer: 08801677.9
(22) Anmeldetag: 22.08.2008
(51) Int. Cl.: A01K 63/00

(54) **Aquarium**
Aquarium
Aquarium

(30) Priorität: 19.09.2007 DE 102007044600
(43) Veröffentlichungstag der Anmeldung: 19.05.2010
(73) Patentinhaber: Fraunhofer-Gesellschaft zur Förderung der angewandten Forschung e.V., 80686 München (DE)
(72) Erfinder: FUHR, Günter, R., 13187 Berlin (DE); ZIMMERMANN, Heiko, 66386 St. Ingbert (DE)
(74) Vertreter: Beier, Ralph
(86) Internationale Anmeldenummer: PCT/EP2008/006933
(87) Internationale Veröffentlichungsnummer: WO 2009/039928

(56) Entgegenhaltungen:
- WO-A-2008/025536
- GB-A- 2 338 185
- JP-A- 2 274 980
- JP-A- 2007 151 452

## Beschreibung

Die Erfindung betrifft ein Aquarium gemäß dem Oberbegriff des Hauptanspruchs.

Zur Beherbergung und Untersuchung von Fischen und sonstigen Meerestieren werden Aquarien eingesetzt, die im Wesentlichen aus einem Wasserbehälter bestehen, der im Betrieb mit Wasser gefüllt ist und die zu beherbergenden Fische bzw. Meerestiere aufnimmt.

Nachteilig an den bekannten Aquarien ist die mangelhafte Eignung zur Beherbergung von Tiefseeorganismen, die in ihrem natürlichen Lebensraum in der Tiefsee an einen hohen Wasserdruck entsprechend einer Wassersäule von mehr als 1000m gewöhnt sind und deshalb in einem Aquarium aufgrund des dort herrschenden geringen Wasserdrucks nicht existieren können.

Weiterhin sind sogenannte Tiefseeaquarien bekannt, die beispielsweise in öffentlichen Zoos zur Ausstellung von Fischen und sonstigen Meerestieren eingesetzt werden. Die Bezeichnung dieser bekannten Aquarien als Tiefseeaquarien ist jedoch irreführend, da der Wasserdruck in diesen Aquarien keinesfalls dem Tiefseedruck entspricht, so dass sich diese Aquarien ebenfalls nicht zur Beherbergung von Tiefseeorganismen eignen.

Bei den bekannten Aquarien wird der Wasserdruck in dem Wasserbehälter durch die in dem Wasserbehälter stehende Wassersäule erzeugt, so dass der Wasserdruck in dem Aquarium durch die vertikale Erstreckung des Wasserbehälters begrenzt ist.

Die Untersuchung von Tiefseeorganismen erfolgt deshalb bisher mittels Unterseebooten in der Tiefsee, was jedoch mit verschiedenen Nachteilen verbunden ist. Zum Einen ist der Einsatz von Unterseebooten zur Untersuchung von Tiefseeorganismen äußerst aufwendig. Zum Anderen ist die Einsatzdauer von Unterseebooten zeitlich begrenzt, so dass auch nur entsprechend kurzzeitige Untersuchungen an den Tiefseeorganismen vorgenommen werden können.

Weiterhin sind aus den beiden bisher unveröffentlichten Patentanmeldungen DE 10 2006 041 063 und DE 10 2007 027 643 Tiefseeaquarien bekannt, bei denen der Wasserbehälter in einem Schacht eines Untertagebergwerks angeordnet ist und sich deshalb über einen großen Höhenunterschied erstrecken kann, was am Boden des Aquariums zu einem entsprechend großen Wasserdruck führt.

Nachteilig an diesen bekannten Tiefseeaquarien in Untertagebergwerken ist jedoch die Betriebsgefahr, da im Falle eines Berstens oder einer Undichtigkeit des Aquariumsbehälters enorme Wassermengen austreten und den Schacht des Untertagebergwerks fluten.

Ein weiterer Nachteil von Tiefseeaquarien in Untertagebergwerken ist die Tatsache, dass der Aquariumsbehälter den Schachtquerschnitt nahezu vollständig ausfüllt, so dass Untersuchungsgeräte und Messinstrumente für wissenschaftliche Arbeiten nur schwierig in dem Schacht untergebracht werden können.

Nachteilig ist ferner, dass der maximal mögliche Querschnitt des Aquariums durch den Querschnitt der Schächte begrenzt ist, die in der Regel einen Durchmesser zwischen 5 m und 15 m aufweisen.

Ferner steigt der hydrostatische Druck in den bekannten Tiefseeaquarien in Bergwerksschächten mit der Tiefe kontinuierlich an, so dass die Bereiche gleichen Drucks jeweils auf eine bestimmte Tiefenlage in dem Aquarium beschränkt sind. Zur Untersuchung von Meeresorganismen bei einem bestimmten hydrostatischen Druck steht deshalb nur ein sehr begrenzter Raum zur Verfügung.

Ein weiterer Nachteil der bisher konzipierten Tiefseeaquarien in Untertagebergwerken ist die schwierige Temperierung des in dem Aquarium befindlichen Wassers, da jede Kühlung oder Erwärmung des Wassers aufgrund der dadurch erzeugten Änderungen der spezifischen Dichte zu starken vertikalen Wasserbewegungen in dem Aquariumsbehälter führt.

Weiterhin ist der Einsatz der bisher konzipierten Aquarien auf Untertagebergwerke mit senkrecht verlaufenden Schächten beschränkt, da sich nur in senkrechten Schächten ausreichend druckfeste Aquariumsbehälter montieren lassen.

Aus DE 36 42 733 A1 ist ein Aquarium bekannt, bei dem ein erhöhter Druck in dem Aquarium eingestellt werden kann, indem eine Druckluftquelle Druckluft in das Aquarium einleitet. Nachteilig an diesem bekannten Aquarium ist also, dass zur Erhöhung des Drucks in dem Aquarium eine Druckluftquelle erforderlich ist.

Ferner ist aus EP 0 295 322 A1 ein Verfahren zur Durchführung chemischer Prozesse unter Druck bekannt. Hierbei ist am Boden eines Bergwerksschachts ein Reaktionsbehälter bekannt, der über eine Steigleitung und eine Fallleitung mit einer Suspension durchspült werden kann. Hierbei handelt es sich jedoch nicht um eine Aquarium in dem erfindungsgemäßen Sinne.

Aus JP 2007 151452 A ist eine Anordnung gemäß dem Oberbegriff des Hauptanspruchs bekannt. Hierbei ist jedoch der maximal erreichbare hydrostatische Druck in dem Aquariumsbehälter begrenzt.

Schließlich ist zum Stand der Technik noch hinzuweisen auf DE 100 07 160 A1.

Der Erfindung liegt deshalb die Aufgabe zugrunde, die eingangs beschriebenen herkömmlichen Aquarien entsprechend zu verbessern.

Diese Aufgabe wird durch ein erfindungsgemäßes Aquarium gemäß dem Hauptanspruch gelöst.

Die Erfindung umfasst die allgemeine technische Lehre, den erwünschten hydrostatischen Druck in dem Aquarium nicht durch die in dem Aquariumsbehälter stehende Flüssigkeitssäule zu erzeugen, sondern durch eine Steigleitung (z.B. ein Stahlrohr), die sich von dem Aquariumsbehälter ausgehend nach oben erstreckt und durch die in der Steigleitung stehende Flüssigkeitssäule den hydrostatischen Druck in dem Aquariumsbehälter bestimmt.

Die Erfindung sieht also vor, dass die Funktion der Druckerzeugung von dem Aquariumsbehälter getrennt und von der Steigleitung übernommen wird. Diese Funktionstrennung bietet den Vorteil, dass der Aquariumsbehälterbehälter einerseits und die Steigleitung andererseits auf ihre Funktionen hin optimiert werden können.

So kann die Steigleitung einen sehr geringen Querschnitt aufweisen, da der durch die Steigleitung erzeugte hydrostatische Druck in dem Aquarium nicht von dem Querschnitt der Steigleitung abhängt, sondern lediglich durch die Höhe der in der Steigleitung stehenden Flüssigkeitssäule bestimmt wird. Eine Querschnittsminimierung der Steigleitung ist jedoch zur Verringerung der Betriebsgefahr vorteilhaft, da auf diese Weise bei einer Undichtigkeit oder einem Bersten der Steigleitung geringere Flüssigkeitsmengen austreten.

Für den Aquariumsbehälter bietet die Funktionstrennung den Vorteil, dass sich der Aquariumsbehälter nicht mehr über einen großen Höhenunterschied erstrecken muss. Zum Einen ist das Aquarium deshalb in der Herstellung wesentlich weniger aufwendig. Zum Anderen lässt sich ein Aquarium mit einer geringeren vertikalen Erstreckung einfacher temperieren, da temperaturbedingte Wasserbewegungen aufgrund der geringeren vertikalen Erstreckung weniger intensiv sind.

Gemäß der Erfindung ist das Aquarium unterirdisch in einem Untertagebergwerk (z.B. Steinkohlebergwerk) angeordnet, wobei die Steigleitung mindestens auf einem Teil ihrer Länge unterirdisch durch das Untertagebergwerk verläuft, insbesondere durch einen Schacht und/oder durch einen Stollen des Untertagebergwerks. Dies bietet den Vorteil, dass stillgelegte Untertagebergwerke einer neuen Nutzung zugeführt werden können, so dass es nicht erforderlich ist, einen ausreichend tiefen Schacht bergmännisch abzutäufen.

Hierbei besteht die Möglichkeit, dass sich die Steigleitung über die Erdoberfläche hinaus nach oben erstreckt, um den hydrostatischen Druck in dem Aquarium zusätzlich zu erhöhen. Die Flüssigkeitssäule in der Steigleitung und damit der hydrostatische Druck in dem Aquarium ist hierbei also größer als die Schachttiefe. Beispielsweise kann sich die Steigleitung oberhalb der Erdoberfläche über einen Höhenunterschied von mehr als 10m, 20m, 50m, 100m, 200m, 500m, 1000m, 2000m oder sogar mehr als 5000m erstrecken. Die vorstehend genannten größeren Höhenunterschiede lassen sich beispielsweise realisieren, indem die Steigleitung oberhalb der Erdoberfläche an einem Berg nach oben geführt wird.

Eine andere Möglichkeit zur zusätzlichen Erhöhung des Drucks in dem Aquarium besteht darin, die Flüssigkeitssäule in der Steigleitung mit einem zusätzlichen Stempeldruck zu beaufschlagen.

Vorzugsweise weist die Steigleitung einen wesentlich kleineren Innenquerschnitt auf als der Schacht und/oder der Stollen des Untertagebergwerks. Dadurch wird vorteilhaft die Betriebsgefahr verringert, da das Untertagebergwerk bei einem Bersten oder einer Undichtigkeit der Steigleitung allenfalls geringfügig geflutet wird. Beispielsweise kann die Steigleitung einen Durchmesser von weniger als 50cm aufweisen, während der Schacht einen Durchmesser von 10m hat. Das gesamte Füllungsvolumen der Steigleitung kann dann von einem Pumpensumpf mit einem Volumen von 200m³ aufgenommen, wenn sich die Steigleitung aufgrund eines Berstens oder einer sonstigen Undichtigkeit vollständig entleert.

Aus diesem Grund weist das Untertagebergwerk vorzugsweise unterhalb des Aquariums und/oder unterhalb des unteren Endes der Steigleitung einen leeren Hohlraum (z.B. Pumpensumpf) auf, der größer ist als das Füllungsvolumen der Steigleitung und/oder des Aquariums, um ein gefahrloses Ablassen der Flüssigkeit aus der Steigleitung und/oder aus dem Aquarium in den leeren Hohlraum des Untertagebergwerks zu ermöglichen. Bei einem Bersten der Steigleitung wird das austretende Wasser dann vollständig von dem leer stehenden Hohlraum des Untertagebergwerks aufgenommen, so dass der genutzte und möglicherweise von Bedienungspersonal genutzte Raum des Untertagebergwerks nicht geflutet wird.

In einer anderen Variante der Erfindung erstreckt sich die Steigleitung zumindest auf einem Teil ihrer Länge an einem Berg oder in einem Berg nach oben.

In einer Ausführungsform dieser Variante ist der Aquariumsbehälter in unmittelbarer Nähe des Berges angeordnet, so dass die Steigleitung direkt an oder in dem Berg nach oben geführt werden kann, um in dem Aquariumsbehälter den gewünschten hydrostatischen Druck zu erzeugen.

In einer anderen Ausführungsform dieser Variante ist der Aquariumsbehälter dagegen von dem Berg entfernt angeordnet und über eine im Wesentlichen horizontal bzw. oberirdische Druckleitung mit der Steigleitung verbunden, die an oder in dem Berg nach oben geführt ist. Hierbei kann die Druckleitung zwischen dem Aquariumsbehälter und der Steigleitung beispielsweise eine Entfernung von mindestens 100m, 200m, 500m, 1km, 2km, 5km, 10km, 20km oder sogar 50km überbrücken.

Darüber hinaus ermöglicht die Verlegung der Steigleitung an einem Berg eine Flüssigkeitssäule in der Steigleitung von mehr als 10m, 50m, 100m, 200m, 500m, 1km, 2km oder sogar mehr als 5km, wobei die erreichbare Flüssigkeitssäule im Wesentlichen nur durch die Höhe der in der Natur vorkommenden Berge begrenzt wird.

Vorzugsweise weist das erfindungsgemäße Aquarium ein Absperrventil auf, welches den Aquariumsbehälter wahlweise mit der Steigleitung verbindet oder von der Steigleitung trennt. Dies bietet den Vorteil, dass die einzelnen Aquariumsbehälter im Havariefall von der Steigleitung getrennt werden können und deshalb nicht auslaufen.

Darüber hinaus ist vorzugsweise vorgesehen, dass die Steigleitung durch mehrere hintereinander angeordnete Absperrventile in aufeinanderfolgende Leitungsabschnitte unterteilt ist, die durch die Absperrventile voneinander getrennt werden können. Bei einem Bersten oder einer Undichtigkeit der Steigleitung in einem der Leitungsabschnitte können dann die Absperrventile geschlossen werden, wodurch der beschädigte Leitungsabschnitt isoliert wird, so dass nur eine relativ geringe Flüssigkeitsmenge aus der Steigleitung austritt.

Die Unterteilung der Steigleitung in mehrere Leitungsabschnitte ermöglicht auch eine Trockenlegung einzelner Leitungsabschnitte und einen einfachen Austausch der trockengelegten Leitungsabschnitte.

Ferner weist das erfindungsgemäße Aquarium vorzugsweise ein Ablassventil auf, das an die Steigleitung an ihrem unteren Ende angeschlossen ist, um Flüssigkeit aus der Steigleitung ablassen zu können. Bei einer Undichtigkeit oder einem Bersten der Steigleitung im oberen Bereich der Steigleitung kann dann das Ablassventil geöffnet werden, um die Steigleitung schnell in einen unterhalb des Ablassventils befindlichen Hohlraum (z.B. Pumpensumpf) zu entleeren, damit Geräte und Personen in dem Schacht auf der Höhe der Undichtigkeit nicht von der aus der Steigleitung austretenden Flüssigkeit überflutet werden.

Weiterhin ist vorzugsweise eine Druckpumpe vorgesehen, die am unteren Ende der Steigleitung an die Steigleitung angeschlossen ist, um Flüssigkeit durch die Steigleitung nach oben zu pumpen.

Ferner kann am oberen Ende der Steigleitung ein Absaugventil angeschlossen sein, über das Flüssigkeit aus der Steigleitung abgesaugt werden kann, um im Störungsfall die in der Steigleitung stehende Flüssigkeitssäule zu entlasten. An das Absaugventil ist deshalb vorzugsweise eine Saugpumpe angeschlossen, die vorzugsweise oberirdisch angeordnet ist. Das Absaugen von Flüssigkeit aus der Steigleitung ermöglicht eine gezielte Druckverringerung, so dass die Reaktion von Tiefseeorganismen auf die Druckverringerung untersucht werden kann.

In einem Ausführungsbeispiel der Erfindung weist das Aquarium mehrere getrennte Aquariumsbehälter auf, in welche die Steigleitung mündet. Beispielsweise können mehrere Aquariumsbehälter den gleichen hydrostatischen Druck aufweisen, wozu die Aquariumsbehälter in derselben Höhe an die Steigleitung angeschlossen sind. Es besteht jedoch auch die Möglichkeit, dass die verschiedenen Aquariumsbehälter in unterschiedlichen Höhen bzw. Tiefen an die Steigleitung angeschlossen sind und deshalb einen unterschiedlichen hydrostatischen Druck aufweisen.

In einem Ausführungsbeispiel der Erfindung ist ferner ein Vorratsbehälter vorgesehen, der im Betrieb mit Flüssigkeit gefüllt ist und am oberen Ende der Steigleitung in die Steigleitung mündet, um die Steigleitung mit Flüssigkeit (z.B. Wasser) zu befüllen. Bei diesem Vorratsbehälter kann es sich beispielsweise um einen natürlichen Vorratsbehälter handeln, wie beispielsweise einen in großer Höhe befindlichen Bergsee. Es besteht jedoch alternativ auch die Möglichkeit, dass der Vorratsbehälter ein künstlicher Vorratsbehälter ist, wie beispielsweise ein Wasserbecken oder ein Wassertank.

Ferner ist in einem Ausführungsbeispiel der Erfindung eine Temperiereinrichtung vorgesehen, welche die Flüssigkeit in dem Aquariumsbehälter kühlt und/oder erwärmt. Bei einem senkrecht verlaufenden Aquariumsbehälter besteht hierbei die Möglichkeit, dass am oberen Ende des Aquariumsbehälters eine Kühlung und/oder am unteren Ende des senkrechten Aquariumsbehälters eine Heizung angeordnet ist, wodurch sich die Temperatur der Flüssigkeit gut einstellen lässt.

Weiterhin kann das erfindungsgemäße Aquarium eine Druckschleuse umfassen, um Lebewesen (z.B. Tiefseeorganismen) oder Gegenstände in den unter Druck stehenden Aquariumsbehälter einzubringen oder daraus zu entnehmen.

Ferner kann der Aquariumsbehälter bei dem erfindungsgemäßen Aquarium ein Ablassventil aufweisen, um Flüssigkeit aus dem Aquariumsbehälter abzulassen und dadurch den hydrostatischen Druck in dem Aquariumsbehälter zu mindern.

Es wurde bereits vorstehend erwähnt, dass bei einer Undichtigkeit oder einem Bersten der Steigleitung Flüssigkeit aus der Steigleitung austritt, was bei einer Anordnung der Steigleitung in einem Bergwerksschacht dazu führt, dass der Schacht teilweise geflutet wird. Zur Verringerung dieser Berstgefahr kann die Steigleitung in mehrere nebeneinander verlaufende und voneinander getrennte Teilleitungen aufgeteilt sein, so dass die bei einem Leitungsbruch einer der Teilleitungen austretende Flüssigkeitsmenge äußerst gering ist und allenfalls zu einem minimalen Fluten des Bergwerksschachts führt. Die einzelnen Teilleitungen sind hierbei vorzugsweise zu einem Leitungspaket zusammengefasst.

Ferner besteht im Rahmen der Erfindung die Möglichkeit, dass die Steigleitung auf einem Teil ihrer Länge horizontal oder schräg verläuft. Darüber hinaus kann die Steigleitung eine oder mehrere Verzweigungen aufweisen.

Ferner besteht im Rahmen der Erfindung auch die Möglichkeit, dass der Aquariumsbehälter einerseits und die Steigleitung andererseits mit unterschiedlichen Flüssigkeiten gefüllt sind, die vorzugsweise nicht mischbar sind. Beispielsweise kann die Flüssigkeit in der Steigleitung eine größere spezifische Dichte aufweisen als die Flüssigkeit in dem Aquariumsbehälter, um mit einer relativ geringen Flüssigkeitssäule in der Steigleitung einen relativ großen hydrostatischen Druck in dem Aquariumsbehälter zu erzeugen.

Andere vorteilhafte Weiterbildungen der Erfindung sind in den Unteransprüche gekennzeichnet oder werden nachstehend zusammen mit der Beschreibung der bevorzugten Ausführungsbeispiele der Erfindung anhand der Figuren näher erläutert. Es zeigen:
- Figur 1: eine schematische Querschnittsansicht durch ein erfindungsgemäßes Aquarium in einem Untertagebergwerk,
- Figur 2: eine Querschnittsansicht durch einen Teil eines erfindungsgemäßen Aquariums in einem Untertagebergwerk mit einem Aquariumsbehälter in einem Stollen und einer Steigleitung, die in einem Schacht des Untertagebergwerks verläuft,
- Figur 3: eine Abwandlung der vorstehenden Ausführungsbeispiele eines erfindungsgemäßen Aquariums in einem Untertagebergwerk,
- Figur 4: eine Teilansicht eines erfindungsgemäßen Aquariums in einem Untertagebergwerk.

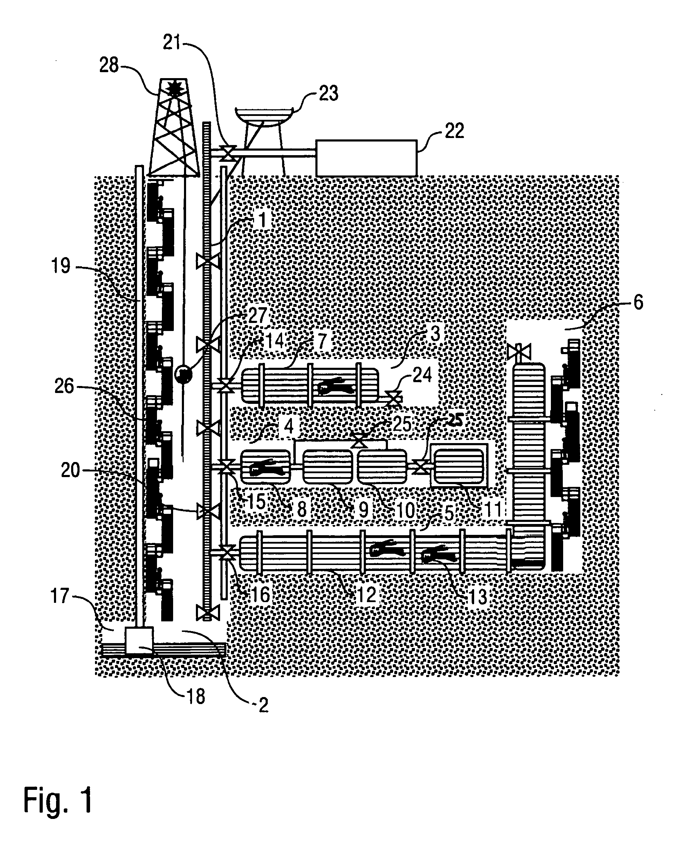

Figur 1 zeigt ein erfindungsgemäßes Aquarium, das in einem Untertagebergwerk angeordnet ist, um einen Wasserdruck zu erzeugen, der einem Tiefseedruck entspricht.

Der Wasserdruck wird hierbei durch eine Steigleitung 1 erzeugt, die in einem Schacht 2 des Untertagebergwerks angeordnet ist, wobei der Schacht 2 eine Täufe (Tiefe) von mehr als 1000m aufweist, so dass die in der Steigleitung 1 stehende Wassersäule am Boden der Steigleitung 1 einen entsprechenden Wasserdruck erzeugt.

Von dem Schacht 2 zweigen seitlich mehrere Stollen 3, 4, 5 ab, wobei von dem Stollen 5 ein Blindschacht 6 nach oben abgeht. In den Stollen 3, 4, 5 und in dem Blindschacht 6 sind Aquariumsbehälter 7, 8, 9, 10, 11 und 12 angeordnet, die beispielsweise zur Beherbergung und Untersuchung von Tiefseeorganismen 13 dienen können.

Die Aquariumsbehälter 7, 8 und 12 sind über jeweils ein Absperrventil 14, 15, 16 an die Steigleitung 1 angeschlossen, so dass die in der Steigleitung 1 oberhalb des jeweiligen Absperrventils 14, 15 bzw. 16 stehende Flüssigkeitssäule den Druck in dem Wasserbehälter 7, 8 bzw. 12 bestimmt, wenn das jeweilige Absperrventil 14, 15 bzw. 16 geöffnet ist.

Die Steigleitung 1 weist hierbei einen wesentlich geringeren Innenquerschnitt auf als der Schacht 2, so dass bei einer Undichtigkeit oder einem Bersten der Steigleitung 1 nur relativ geringe Wassermengen aus der Steigleitung 1 austreten, die vollständig von einem Pumpensumpf 17 am unteren Ende des Schachts 2 aufgenommen werden können.

In dem Pumpensumpf 17 befindet sich weiterhin eine Druckpumpe 18, die das in dem Pumpensumpf 17 befindliche Wasser durch eine Druckleitung 19 nach oben aus dem Schacht 2 pumpen kann.

Die Betriebsgefahr des erfindungsgemäßen Aquariums wird durch mehrere Absperrventile 20 weiter verringert, wobei die Absperrventile 20 die Steigleitung 1 in mehrere übereinander angeordnete Leitungsabschnitte aufteilen. Bei einem Leitungsbruch oder einer Undichtigkeit in einem der Leitungsabschnitte der Steigleitung 1 kann dieser Leitungsabschnitt dann von den restlichen Leitungsabschnitten isoliert werden, indem die benachbarten Absperrventile 20 geschlossen werden. Dadurch wird die bei einer Undichtigkeit maximal austretende Wassermenge weiter reduziert.

Am oberen Ende der Steigleitung 1 ist über ein Absaugventil 21 eine Saugpumpe 22 an die Steigleitung 1 angeschlossen, wobei die Saugpumpe 22 im geöffneten Zustand des Absaugventils 21 Wasser aus der Steigleitung 1 absaugen kann, um die in der Steigleitung 1 stehende Wassersäule zu erleichtern und dadurch den Druck abzusenken.

Darüber hinaus ist oberirdisch ein Vorratsbehälter 23 angeordnet, der mit Wasser gefüllt ist und über eine Leitung mit der Steigleitung 1 verbunden ist, um die Steigleitung 1 mit Wasser zu befüllen.

Ferner weist der Aquariumsbehälter 7 in dem Schacht 3 ein Ablassventil 24 auf, über das Wasser aus dem Aquariumsbehälter 7 abgelassen werden kann, um den Druck in dem Aquariumsbehälter 7 zu verringern.

Die Aquariumsbehälter 8-11 in dem Schacht 4 sind dagegen voneinander getrennt, wobei die beiden Wasserbehälter 8 und 9 durch eine Leitung miteinander verbunden sind. Die Aquariumsbehälter 8 und 9 einerseits und der Aquariumsbehälter 10 andererseits sind über eine Leitung und ein Absperrventil 25 miteinander verbunden. Darüber hinaus sind auch die beiden Aquariumsbehälter 10 und 11 über eine Leitung und ein Absperrventil 25 miteinander verbunden.

In dem Schacht 2 befinden sich neben der Steigleitung 1 Treppen 26 sowie ein Fahrstuhl mit einer Kabine 27, die von einem Förderturm 28 heraufgezogen bzw. heruntergelassen werden kann.

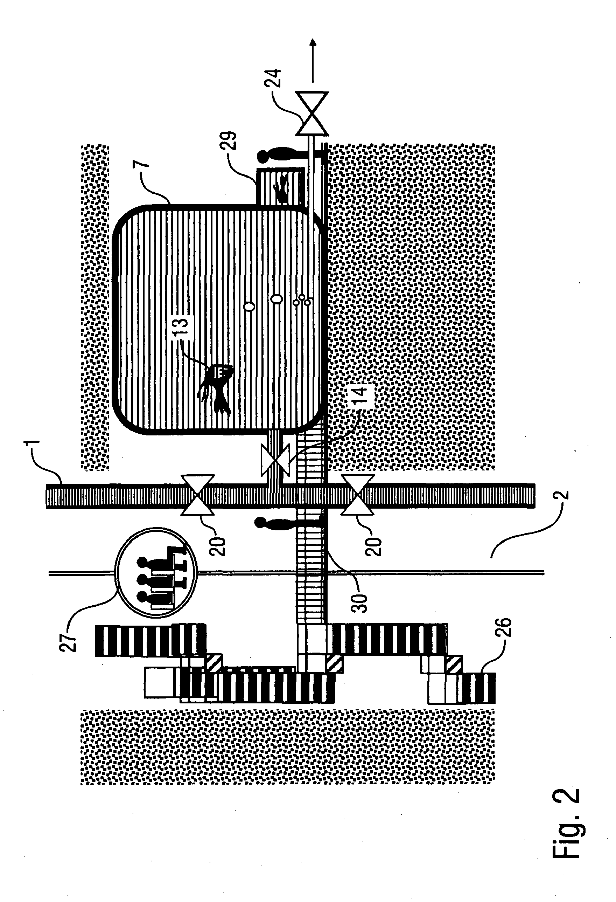

Figur 2 zeigt eine Teilansicht eines erfindungsgemäßen Aquariums in einem Untertagebergwerk, wobei dieses Ausführungsbeispiel teilweise mit dem vorstehend beschriebenen und in Figur 1 dargestellten Ausführungsbeispiel übereinstimmt, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass der Aquariumsbehälter 7 eine Druckschleuse 29 aufweist, über die Tiere, Futter oder Instruments ohne Druckverlust in das Innere des Aquariumsbehälters 7 eingebracht oder daraus entnommen werden können.

Darüber hinaus zeigt diese Zeichnung eine Plattform 30, die von Wissenschaftlern, Bedienungspersonal oder Besuchern betreten werden kann.

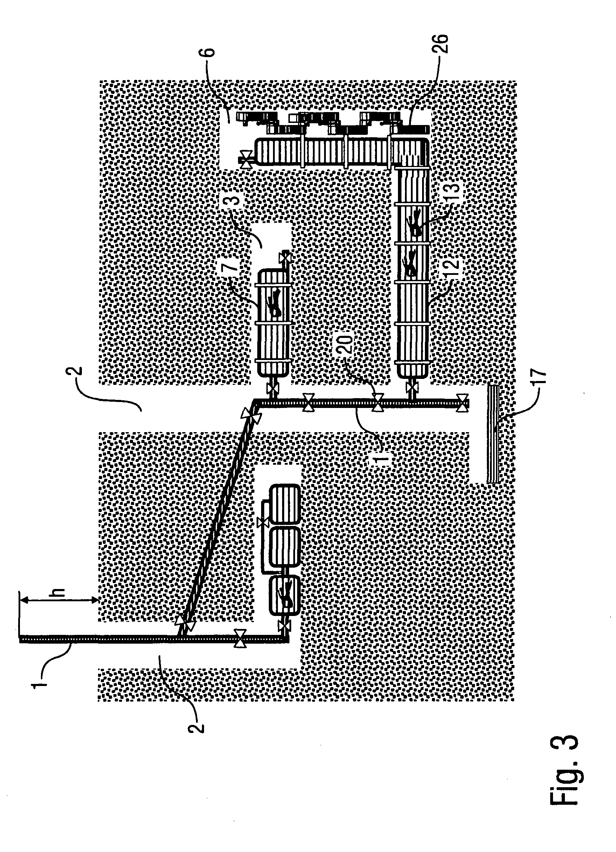

Das Ausführungsbeispiel gemäß Figur 3 stimmt wiederum weitgehend mit den vorstehend beschriebenen Ausführungsbeispielen überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Steigleitung 1 von unten nicht nur bis zur Erdoberfläche reicht, sondern oberhalb der Erdoberfläche einen Höhenunterschied h überwindet, wodurch die in der Steigleitung 1 stehende Wassersäule und damit der maximal erzeugbare Wasserdruck zusätzlich erhöht wird.

Eine weitere Besonderheit dieses Ausführungsbeispiels besteht darin, dass sich die Steigleitung 1 verzweigt und nach der Verzweigung schräg durch das Erdreich verläuft.

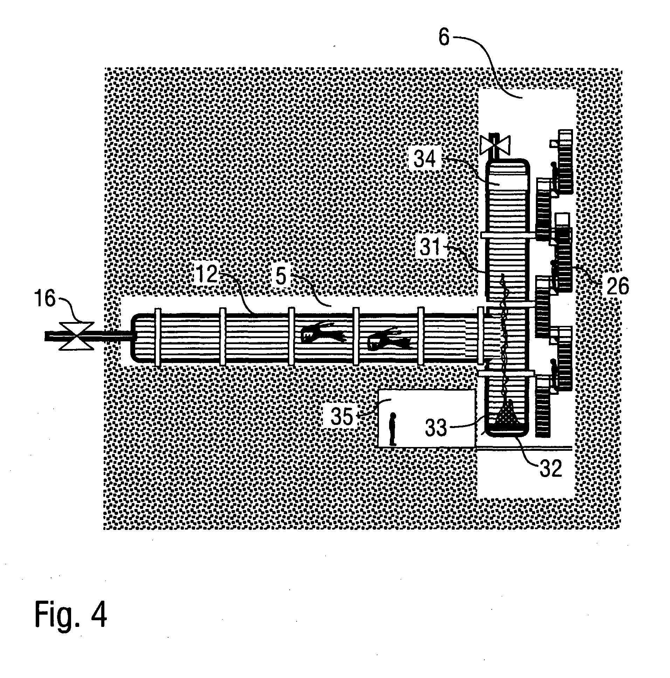

Auch das Ausführungsbeispiel gemäß Figur 4 stimmt weitgehend mit den vorstehend beschriebenen Ausführungsbeispielen überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass der Aquariumsbehälter 12 in dem senkrecht verlaufenden Blindschacht 6 einen senkrecht ausgerichteten Behälterabschnitt 31 aufweist. Am unteren Ende des Behälterabschnitts 31 ist hierbei eine Heizung 32 angeordnet, die eine heiße Quelle 33 beheizt. Am oberen Ende des Behälterabschnitts 31 befindet sich dagegen eine Kühlung 34. Die Heizung 32 ermöglicht zusammen mit der Kühlung 34 eine effektive Einstellung der Temperatur in dem Behälterabschnitt 31.

Eine weitere Besonderheit dieses Ausführungsbeispiels besteht darin, dass sich seitlich neben der Heizung 32 ein Arbeitsraum 35 befindet, von dem aus das System in klimatisierter Umgebung beobachtet und gesteuert werden kann.

### Bezugszeichenliste:

- 1: Steigleitung
- 2: Schacht
- 3-5: Stollen
- 6: Blindschacht
- 7-12: Aquariumsbehälter
- 13: Tiefseeorganismen
- 14-16: Absperrventile
- 17: Pumpensumpf
- 18: Druckpumpe
- 19: Druckleitung
- 20: Absperrventile
- 21: Absaugventil
- 22: Saugpumpe
- 23: Vorratsbehälter
- 24: Ablassventil
- 25: Absperrventil
- 26: Treppen
- 27: Kabine
- 28: Förderturm
- 29: Druckschleuse
- 30: Plattform
- 31: Behälterabschnitt
- 32: Heizung
- 33: Heiße Quelle
- 34: Kühlung
- 35: Arbeitsraum

## Patentansprüche

1. Aquarium mit einem druckdichten Aquariumsbehälter (7-12), der im Betrieb mit einer Flüssigkeit gefüllt ist, mit einer in den Aquariumsbehälter (7-12) mündenden druckfesten Steigleitung (1) zur Erzeugung eines erhöhten hydrostatischen Drucks in dem Aquariumsbehälter (7-12) durch eine in der Steigleitung (1) stehende Flüssigkeitssäule,
**dadurch gekennzeichnet,**
a) **dass** der Aquariumsbehälter (7-12) unterirdisch in einem Untertagebergwerk angeordnet ist, und
b) **dass** die Steigleitung (1) mindestens auf einem Teil ihrer Länge unterirdisch durch das Untertagebergwerk verläuft, insbesondere durch einen Schacht (2) und/oder einen Stollen (3-5).

2. Aquarium nach Anspruch 1, **dadurch gekennzeichnet,**
a) **dass** sich die Steigleitung (1) über die Erdoberfläche hinaus nach oben erstreckt, um den hydrostatischen Druck in dem Aquariumsbehälter (7-12) zusätzlich zu erhöhen, und gegebenenfalls
b) **dass** sich die Steigleitung (1) oberhalb der Erdoberfläche über einen Höhenunterschied (h) von mindestens 10m, 20m, 50m, 100m, 200m, 500m, 1000m, 2000m oder 5000m nach oben erstreckt, und/oder
c) **dass** die Steigleitung (1) einen wesentlich kleineren Innenquerschnitt aufweist als der Schacht (2) und/oder der Stollen (3-5) des Untertagebergwerks.

3. Aquarium nach einem der vorhergehenden Ansprüche, **dadurch gekennzeichnet, dass** das Untertagebergwerk unterhalb des Aquariumsbehälters (7-12) und/oder unterhalb des unteren Endes der Steigleitung (1) einen Hohlraum (17) aufweist, das größer ist als das Füllungsvolumen der Steigleitung (1) und/oder des Aquariumsbehälters, um ein gefahrlosen Ablassen der Flüssigkeit aus der Steigleitung (1) und/oder aus dem Aquariumsbehälter (7-12) zu ermöglichen.

4. Aquarium nach einem der vorhergehenden Ansprüche, **dadurch gekennzeichnet, dass** die Flüssigkeitssäule in der Steigleitung (1; 38, 39) eine Höhe von mehr als 10m, 50m, 100m, 200m, 500m, 1km, 2km oder 5km aufweist.

5. Aquarium nach einem der vorhergehenden Ansprüche, **dadurch gekennzeichnet,**
a) **dass** mindestens ein Absperrventil (14, 15, 16), welches den Aquariumsbehälter (7-12) wahlweise mit der Steigleitung (1) verbindet oder von der Steigleitung (1) trennt, und/oder
b) **dass** die Steigleitung (1; 38, 39) durch mehrere hintereinander angeordnete Absperrventile (20) in aufeinander folgende Leitungsabschnitte unterteilt ist.

6. Aquarium nach einem der vorhergehenden Ansprüche, **gekennzeichnet durch**
a) ein Ablassventil, das an die Steigleitung (1; 38, 39) an ihrem unteren Ende angeschlossen ist, um Flüssigkeit aus der Steigleitung (1; 38, 39) abzulassen und/oder
b) eine Druckpumpe (18), die am unteren Ende der Steigleitung (1; 38, 39) an die Steigleitung (1; 38, 39) angeschlossen ist, um Flüssigkeit **durch** die Steigleitung (1; 38, 39) nach oben zu pumpen und/oder
c) ein Absaugventil (21), das an die Steigleitung (1; 38, 39) an ihrem oberen Ende angeschlossen ist, um Flüssigkeit aus der Steigleitung (1; 38, 39) abzusaugen und/oder
d) eine Saugpumpe (22), die an das Absaugventil (21) angeschlossen ist, um Flüssigkeit aus der Steigleitung (1; 38, 39) abzusaugen.

7. Aquarium nach einem der vorhergehenden Ansprüche, **gekennzeichnet durch** mehrere getrennte Aquariumsbehälter (7-12; 40-43; 47-50), in welche die Steigleitung (1; 38, 39) mündet.

8. Aquarium nach Anspruch 7, **dadurch gekennzeichnet, dass** die Aquariumsbehälter (7-12; 40-43; 47-50) in unterschiedlichen Höhe angeordnet sind.

9. Aquarium nach einem der vorhergehenden Ansprüche, **dadurch gekennzeichnet,**
a) **dass** ein Vorratsbehälter (23; 37) vorgesehen ist, der am oberen Ende der Steigleitung (1; 38, 39) in die Steigleitung (1; 38, 39) mündet, und gegebenenfalls
b) **dass** der Vorratsbehälter (37) ein Bergsee oder ein Wasserbecken auf einem Berg (36) ist.

10. Aquarium nach einem der vorhergehenden Ansprüche, **gekennzeichnet durch**
a) eine Temperiereinrichtung (32, 34), welche die Flüssigkeit in dem Aquariumsbehälter (7-12; 40-43; 47-50) kühlt und/oder erwärmt, und/oder
b) eine Druckschleuse (29) zum Einbringen von Lebewesen oder Gegenständen in den unter Druck stehenden Aquariumsbehälter (7-12; 40-43; 47-50), und/oder
c) ein Ablassventil (24), über das die Flüssigkeit aus dem Aquariumsbehälter (7-12; 40-43; 47-50) abgelassen werden kann.

11. Aquarium nach einem der vorhergehenden Ansprüche, **gekennzeichnet durch** einen senkrecht verlaufenden Aquariumsteil (31), wobei am oberen Ende des senkrechten Aquariumsteils (31) eine Kühlung (34) und/oder am unteren Ende des senkrechten Aquariumsteils (31) eine Heizung (32) angeordnet ist.

12. Aquarium nach einem der vorhergehenden Ansprüche, **dadurch gekennzeichnet,**
a) **dass** die Steigleitung (1; 38, 39) ein Leitungspaket aus mehreren nebeneinander verlaufenden und voneinander getrennten Teilleitungen aufweist, um die bei einem Leitungsbruch austretende Flüssigkeitsmenge zu verringern, und/oder
b) **dass** die Steigleitung (1; 38, 39) auf einem Teil ihrer Länge horizontal verläuft, und/oder
c) **dass** die Steigleitung (1; 38, 39) auf einem Teil ihrer Länge schräg verläuft, und/oder
d) **dass** die Steigleitung (1; 38, 39) mindestens eine Verzweigung aufweist, und/oder
e) **dass** der Aquariumsbehälter (7-12; 40-43; 47-50) und die Steigleitung (1; 38, 39) mit unterschiedlichen, insbesondere mit nicht mischbaren Flüssigkeiten gefüllt sind, und gegebenenfalls
f) **dass** die Flüssigkeit in der Steigleitung (1; 38, 39) eine größere spezifische Dichte aufweist als die Flüssigkeit in dem Aquariumsbehälter (7-12; 40-43; 47-50).

## Claims

1. An aquarium comprising a pressure-resistant aquarium container (7-12), which in operation is filled with liquid, with a pressure-resistant riser pipe (1) which opens into the aquarium container (7-12) in order to create a raised hydrostatic pressure in the aquarium container (7-12) by means of a liquid column standing in the riser pipe (1),
**characterised in that**
a) the aquarium container (7-12) is arranged underground in an underground mine, and
b) the riser pipe (1) extends over at least part of the length thereof underground through the underground mine, in particular through a shaft (2) and/or a gallery (3-5).

2. The aquarium according to claim 1,
**characterised in that**
a) the riser pipe (1) extends upwardly above the surface of the earth in order to further increase the hydrostatic pressure in the aquarium container (7-12), and if so
b) the riser pipe (1) extends above the surface of the earth by a height difference (h) of more than 10 m, 20 m, 50 m, 100 m, 200 m, 500 m, 1000 m, 2000 m or more than 5000 m, and/or
c) the riser pipe (1) has a substantially smaller inner cross-section than the shaft (2) and/or the gallery (3-5) of the underground mine.

3. The aquarium according to one of the preceding claims, **characterised in that** the underground mine preferably has a hollow space (17) beneath the aquarium container (7-12) and/or beneath the lower end of the riser pipe (1) which is larger than the fill volume of the riser pipe (1) and/or the aquarium container in order to enable the risk-free release of the liquid out of the riser pipe (1) and/or out of the aquarium container (7-12).

4. The aquarium according to one of the preceding claims, **characterised in that** the liquid column in the riser pipe (1; 38, 39) has a height of more than 10 m, 50 m, 100 m, 200 m, 500 m, 1 km, 2 km or 5 km.

5. The aquarium according to one of the preceding claims, **characterised in that**
a) at least one shut-off valve (14, 15, 16) which optionally connects the aquarium container (7-12) to the riser pipe (1) or separates the aquarium container (7-12) from the riser pipe (1), and/or
b) the riser pipe (1; 38, 39) riser pipe is subdivided into successive pipeline sections by a plurality of shut-off valves (20) arranged one behind the other.

6. The aquarium according to one of the preceding claims, **characterised by**
a) a drain valve which is connected to the riser pipe (1; 38, 39) at the lower end thereof in order to be able to drain liquid out of the riser pipe (1; 38, 39), and/or
b) a pressure pump (18) which is connected to the riser pipe (1; 38, 39) at the lower end thereof, in order to pump liquid upwardly through the riser pipe (1; 38, 39), and/or
c) a suction valve (21), which is connected to the riser pipe (1; 38, 39) at the upper end thereof, in order to draw liquid out of the riser pipe (1; 38, 39), and/or
d) a suction pump (22) which is connected to the suction valve (21), in order to draw liquid out of the riser pipe (1; 38, 39).

7. The aquarium according to one of the preceding claims, **characterised by** a plurality of separate aquarium containers (7-12; 40-43; 47-50), into which the riser pipe (1; 38, 39) opens.

8. The aquarium according to claim 7, **characterised in that** the aquarium containers (7-12; 40-43; 47-50) are arranged at different heights.

9. The aquarium according to one of the preceding claims, **characterised in that**
a) a supply container (23; 37) is provided which opens into the riser pipe (1; 38, 39) at the upper end of the riser pipe (1; 38, 39), and if so
b) the supply container (37) is a mountain lake or a water basin on a mountain (36).

10. The aquarium according to one of the preceding claims, **characterised by**
a) a temperature control apparatus (32, 34) which cools and/or warms the liquid in the aquarium container (7-12; 40-43; 47-50), and/or
b) a pressure transfer chamber (29) for introducing living beings or objects into the aquarium container (7-12; 40-43; 47-50) which is under pressure, and/or
c) a drain valve (24), via which the liquid can be drained out of the aquarium container (7-12; 40-43; 47-50).

11. The aquarium according to one of the preceding claims, **characterised by** a vertically extending aquarium container section (31), wherein a cooling system (34) is arranged at the upper end of the vertical aquarium container section (31) and/or a heater (32) is arranged a the lower end of the vertical aquarium container section (31).

12. The aquarium according to one of the preceding claims, **characterised in that**
a) the riser pipe (1; 38, 39) comprises a pipeline bundle made from a plurality of partial pipelines extending adjacent to one another and separate from one another, in order to reduce the quantity of liquid emerging in the event of a pipeline breakage and/or
b) the riser pipe (1; 38, 39) extends horizontally along part of the length thereof and/or
c) the riser pipe (1; 38, 39) extends inclined along part of the length thereof, and/or
d) the riser pipe (1; 38, 39) comprises at least one branch, and/or
e) the aquarium container (7-12; 40-43; 47-50) and the riser pipe (1; 38, 39) are filled with different, in particular immiscible, liquids, and if so
f) the liquid in the riser pipe (1; 38, 39) has a greater density than the liquid in the aquarium container (7-12; 40-43; 47-50).

## Revendications

1. Aquarium comprenant un récipient d'aquarium (7 - 12) étanche à la pression, qui est rempli en fonctionnement d'un liquide, comprenant une conduite montante (1) résistante à la pression débouchant dans le récipient d'aquarium (7 - 12) servant à générer une pression hydrostatique élevée dans le récipient d'aquarium (7 - 12) par une colonne de liquide se trouvant dans la conduite montante (1),
**caractérisé**
a) **en ce que** le récipient d'aquarium (7 - 12) est disposé sous terre dans une mine souterraine, et
b) **en ce que** la conduite montante (1) s'étend au moins sur une partie de sa longueur sous terre à travers la mine souterraine, en particulier à travers un puits (2) et/ou une galerie (3 - 5).

2. Aquarium selon la revendication 1, **caractérisé**
a) **en ce que** la conduite montante (1) s'étend vers le haut au-delà de la surface du sol afin d'augmenter en complément la pression hydrostatique dans le récipient d'aquarium (7 - 12), et éventuellement
b) **en ce que** la conduite montante (1) s'étend vers le haut au-dessus de la surface du sol au-delà d'une différence de hauteur (h) d'au moins 10 m, 20 m, 50 m, 100 m, 200 m, 500 m, 1000 m, 2000 m ou 5000 m, et/ou
c) **en ce que** la conduite montante (1) présente une section intérieure essentiellement plus petite que le puits (2) et/ou la galerie (3 - 5) de la mine souterraine.

3. Aquarium selon l'une quelconque des revendications précédentes, **caractérisé en ce que** la mine souterraine présente une cavité (17) sous le récipient d'aquarium (7 - 12) et/ou sous l'extrémité inférieure de la conduite montante (1), qui est plus grande que le volume de remplissage de la conduite montante (1) et/ou du récipient d'aquarium afin de permettre une évacuation sans danger du liquide hors de la conduite montante (1) et/ou hors du récipient d'aquarium (7 - 12).

4. Aquarium selon l'une quelconque des revendications précédentes, **caractérisé en ce que** la colonne de liquide présente dans la conduite montante (1 ; 38, 39) une hauteur supérieure à 10 m, 50 m, 100 m, 200 m, 500 m, 1 km, 2 km ou 5 km.

5. Aquarium selon l'une quelconque des revendications précédentes, **caractérisé**
a) **en ce qu'**au moins une soupape d'arrêt (14, 15, 16) au moins au nombre de une relie le récipient d'aquarium (7 - 12) au choix à la conduite montante (1) ou le sépare de la conduite montante (1), et/ou
b) **en ce que** la conduite montante (1 ; 38, 39) est divisée, par plusieurs soupapes d'arrêt (20) disposées les unes derrière les autres, en des tronçons de conduite se suivant les uns les autres.

6. Aquarium selon l'une quelconque des revendications précédentes, **caractérisé par**
a) une soupape d'évacuation, qui est raccordée au niveau de son extrémité inférieure à la conduite montante (1 ; 38, 39) afin d'évacuer le liquide de la conduite montante (1 ; 38, 39) et/ou
b) une pompe à pression (18), qui est raccordée au niveau de l'extrémité inférieure de la conduite montante (1 ; 38, 39) à la conduite montante (1 ; 38, 39) afin de pomper le liquide vers le haut à travers la conduite montante (1 ; 38, 39), et/ou
c) une soupape d'aspiration (21), qui est raccordée à la conduite montante (1 ; 38, 39) au niveau de son extrémité supérieure afin d'aspirer le liquide hors de la conduite montante (1 ; 38, 39), et/ou
d) une pompe d'aspiration (22), qui est raccordée à la soupape d'aspiration (21) afin d'aspirer le liquide hors de la conduite montante (1 ; 38, 39).

7. Aquarium selon l'une quelconque des revendications précédentes, **caractérisé par** plusieurs récipients d'aquarium (7 - 12 ; 40 - 43 ; 47 - 50) séparés, dans lesquels débouche la conduite montante (1 ; 38, 39).

8. Aquarium selon la revendication 7, **caractérisé en ce que** les récipients d'aquarium (7 - 12 ; 40 - 43 ; 47 - 50) sont disposés à des hauteurs différentes.

9. Aquarium selon l'une quelconque des revendications précédentes, **caractérisé**
a) **en ce qu'**un réservoir (23 ; 37) est prévu, lequel débouche au niveau de l'extrémité supérieure de la conduite montante (1 ; 38, 39) dans la conduite montante (1 ; 38, 39), et éventuellement
b) **en ce que** le réservoir (37) est un lac de montagne ou un bassin d'eau sur une montagne (36).

10. Aquarium selon l'une quelconque des revendications précédentes, **caractérisé par**
a) un système de régulation de température (32, 34), qui refroidit et/ou réchauffe le liquide dans le récipient d'aquarium (7 - 12 ; 40 - 43 ; 47 - 50) ; et/ou
b) un sas de pression (29) servant à introduire des êtres vivants ou des objets dans le récipient d'aquarium (7 - 12 ; 40 - 43 ; 47 - 50) sous pression, et/ou
c) une soupape d'évacuation (24), par l'intermédiaire de laquelle le liquide peut être évacué hors du récipient d'aquarium (7 - 12 ; 40 - 43 ; 47 - 50).

11. Aquarium selon l'une quelconque des revendications précédentes, **caractérisé par** une partie d'aquarium (31) s'étendant de manière perpendiculaire, sachant qu'un système de refroidissement (34) est disposé au niveau de l'extrémité supérieure de la partie d'aquarium (31) perpendiculaire, et/ou en ce qu'un système de chauffage (32) est disposé au niveau de l'extrémité inférieure de la partie d'aquarium (31) perpendiculaire.

12. Aquarium selon l'une quelconque des revendications précédentes, **caractérisé**
a) **en ce que** la conduite montante (1 ; 38, 39) présente un paquet de conduites constitué de plusieurs conduites partielles s'étendant les unes à côté des autres et séparées les unes des autres, pour réduire la quantité de liquide sortant en cas de rupture d'une conduite, et/ou
b) **en ce que** la conduite montante (1 ; 38, 39) s'étend de manière horizontale sur une partie de sa longueur, et/ou
c) **en ce que** la conduite montante (1 ; 38, 39) s'étend de manière oblique sur une partie de sa longueur, et/ou
d) **en ce que** la conduite montante (1 ; 38, 39) présente au moins une bifurcation, et/ou
e) **en ce que** le récipient d'aquarium (7 - 12 ; 40 - 43 ; 47 - 50) et la conduite montante (1 ; 38 - 39) sont remplis de liquides différents, en particulier ne pouvant pas être mélangés, et éventuellement,
f) **en ce que** le liquide dans la conduite montante (1 ; 38, 39) présente une densité spécifique plus importante que le liquide dans le récipient d'aquarium (7 - 12 ; 40 - 43 ; 47 - 50).
